# EUROPÄISCHE PATENTSCHRIFT

(11) **EP 4 028 740 B1**
(45) Veröffentlichungstag und Bekanntmachung des Hinweises auf die Patenterteilung: **08.05.2024**
(21) Anmeldenummer: 20812266.3
(22) Anmeldetag: 24.11.2020
(51) Int. Cl.: G01L 5/165

(54) **SENSORVORRICHTUNG MIT KOMBINIERTEM KRAFT- UND KAPAZITÄTSSENSOR**
SENSOR DEVICE WITH COMBINED FORCE AND CAPACITANCE SENSOR
SYSTÈME DE DÉTECTION À CAPTEUR DE FORCE ET DE CAPACITÉ COMBINÉ

(30) Priorität: 27.11.2019 DE 102019132103
(43) Veröffentlichungstag der Anmeldung: 20.07.2022
(73) Patentinhaber: Tacterion GmbH, 80335 München (DE)
(72) Erfinder: URBANEK, Holger, 80687 München Bayern (DE); STROHMAYR, Michael, Wolfgang, 86159 Augsburg Bayern (DE); HELMINGER, Conrad, 80797 München Bayern (DE); RÖMMELT, Alexander, 81739 München Bayern (DE)
(74) Vertreter: Rösler Rasch van der Heide & Partner
(86) Internationale Anmeldenummer: PCT/EP2020/083159
(87) Internationale Veröffentlichungsnummer: WO 2021/105097

(56) Entgegenhaltungen:
- US-A1- 2015 019 013

## Beschreibung

Die Erfindung betrifft eine Sensorvorrichtung mit einem kombinierten Sensor, der zur Erfassung einer durch ein Objekt OBJ aus einem Material MAT auf den Sensor ausgeübten mechanischen Kraft Fₑₓₜ, einer Position POS_{Fext} des Krafteintrags Fₑₓₜ auf dem Sensor und einer elektrischen kapazitiven Koppelung C_{SEN-OBJ} des Sensors mit dem Objekt OBJ aus dem Material MAT eingerichtet und ausgeführt ist. Die Erfindung betrifft weiterhin ein Verfahren zum Betrieb einer ebensolchen Sensorvorrichtung.

Sensorvorrichtungen mit Kraftsensoren zur Messung einer auf den Sensor aufgebrachten Kraft (beispielsweise resistive Sensoren mit einem Array aus Sensorelementen, sog. Taxeln) und Kapazitätssensoren zur Messung einer elektrischen kapazitiven Koppelung eines Sensors mit einem Objekt sind im Stand der Technik bekannt.

Aus der US 2015/0019013 A1 geht ein berührungsempfindlicher Robotergreifer hervor. Der Robotergreifer umfasst eine Messeinheit zur Messung von linearen und/oder angulären Auslenkungen. Die Messeinheit umfasst insbesondere eine stationäre und eine bewegliche Elektrode. Die Messeinheit kann dazu ausgeführt sein, eine dielektrische Leitfähigkeit eines gegriffenen Objekts zu bestimmen. Es kann daher auf Basis von für verschiedene Materialien vorgegebenen dielektrischen Leitfähigkeiten, aufgrund einer aktuellen Messung der dielektrischen Leitfähigkeit, das Material aus dem das jeweils gegriffene Objekte besteht bestimmt werden.

Die Aufgabe der Erfindung ist es, eine Sensorvorrichtung anzugeben, die eine möglichst genaue Bestimmung eines Materials MAT eines Objekts OBJ, das eine Kraftwirkung Fₑₓₜ auf einen Kraftsensor der Sensorvorrichtung ausübt, zu ermöglichen.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Ein erster Aspekt der Erfindung betrifft eine Sensorvorrichtung mit einem kombinierten Sensor, der zur gleichzeitigen Erfassung einer durch ein Objekt OBJ aus einem Material MAT auf den Sensor ausgeübten mechanischen Kraft Fₑₓₜ, einer Position POS_{Fext} des Krafteintrags Fₑₓₜ auf dem Sensor und einer elektrischen kapazitiven Koppelung C_{SEN-OBJ} des Sensors mit dem Objekt OBJ aus dem Material MAT eingerichtet und ausgeführt ist, umfassend: eine Datenbank, mittels der für eine Anzahl N von vorgegebenen Materialien MATₙ Zusammenhänge Zₙ der kapazitiven Koppelung C_{SEN-OBJ-MATn} des Sensors mit einem Objekt OBJ aus einem Material MATₙ in Abhängigkeit von einer mechanischen Kraft F_{ext,OBJ}, die das Objekt OBJ auf den Sensor ausübt, bereitgestellt werden, mit n = 1, 2, ..., N und N ≥ 1; eine Erfassungseinheit, mittels der aus Sensordaten des Sensors die aktuellen Messwerte: Fₑₓₜ(t), POS_{Fext}(t) und C_{SEN-OBJ}(t) ermittelt werden; eine Auswerteeinheit, mittels der auf Basis der Zusammenhänge Zₙ das Material MAT* des Objekts OBJ ermittelt wird, das die Kraft Fₑₓₜ(t) auf den Sensor ausübt, mit MAT* ε MATₙ; und eine Ausgabeeinheit, mittels der das ermittelte Material MAT* ausgegeben wird.

Vorteilhaft ist die Ausgabeeinheit derart ausgeführt, dass zusätzlich die ermittelte externe Kraft Fₑₓₜ(t) und/oder die Position POS_{Fext}(t) des Krafteintrags Fₑₓₜ(t) ausgegeben wird.

Die Erfindung basiert insbesondere auf der Erkenntnis, dass die kapazitive Koppelung C_{SEN-OBJ}(t) des kombinierten Sensors mit einem Objekt OBJ von der Kraft Fₑₓₜ(t) abhängt, die das Objekt OBJ auf den Sensor ausübt. Dies begründet sich einerseits durch eine Änderung der Eigenkapazität des Sensors und/oder durch eine Veränderung der Eigenkapazität des Objekts jeweils durch die entsprechende Kraftwirkung. Insbesondere die Ermittlung des Materials MAT* eines Objekts OBJ wird durch die Berücksichtigung dieser Zusammenhänge erheblich verbessert und robuster möglich.

Die Zusammenhänge Zₙ werden zuvor vorteilhaft durch entsprechende Referenz-Messungen ermittelt. Dabei wirken Objekte aus bekannten Materialien mit bekannten Kräften Fₑₓₜ auf den kombinierten Sensor ein, wobei jeweils die kapazitive Koppelung in Abhängigkeit des Objektmaterials und der Kraft Fₑₓₜ ermittelt wird. Die dabei ermittelten Referenz-Messergebnisse werden vorteilhaft bspw. als Look-Up Tabelle oder als funktionaler Zusammenhang in der Datenbank bereitgestellt.

Basierend auf der Erkenntnis, dass die kapazitive Koppelung abhängig von der Meßfrequenz F_{U} ist, die während der Messung der kapazitiven Koppelung verwendet wird, ergibt sich eine vorteilhafte Weiterbildung der vorgeschlagenen Sensorvorrichtung dadurch, dass die von der Datenbank bereitgestellten Zusammenhänge Zₙ jeweils eine Abhängigkeit der kapazitiven Koppelung C_{SEN-OBj-MATn}(F_{U}) von einer Frequenz F_{U} einer Messspannung U des Sensors beinhalten: Zₙ = Zₙ(Fᵤ), und dass die Ausgabeeinheit die kapazitiven Koppelungen C_{SEN-OBJ,Fu}(t) für verschiedene Frequenzen F_{U} ermittelt und ausgibt.

Die Auswerteeinheit nutzt vorteilhaft die Zusammenhänge Zₙ(F_{U}) zur Ermittlung des Materials MAT*, wobei die Erfassungseinheit die Sensordaten: Fₑₓₜ(t), POS_{Fext}(t) und C_{SEN-OBJ,Fu}(t) zuvor für verschiedene Frequenzen F_{U} ermittelt. Die Auswerteeinheit wird damit vorteilhaft in die Lage versetzt, unterschiedliche Materialien mit einer deutlich besseren Unterscheidbarkeit bzw. Robustheit zu erkennen.

Ein weiterer Aspekt der Erfindung betrifft eine Greifvorrichtung, die eine Sensorvorrichtung wie vorstehend beschrieben aufweist. Die Greifvorrichtung kann beispielsweise eine oder mehrere Greiferbacken aufweisen, wobei die Greiferbacken jeweils zumindest einen kombinierten Sensor, wie vorstehend beschrieben, aufweisen. Die Greifvorrichtung kann insbesondere als Endeffektor an einem Robotermanipulator ausgebildet sein. Derartige Greifvorrichtungen ermöglichen insbesondere das Ermitteln eines Materials MAT, aus dem ein gegriffenes oder gehaltenes Objekt gefertigt ist, während der Handhabung dieses Objekts.

Ein weiterer Aspekt der Erfindung betrifft eine Maschine, insbesondere eine Werkzeugmaschine (bspw. eine Bohrmaschine, eine Kettensäge, eine Sägemaschine, ein Hobelmaschine, eine Schleifmaschine, eine Küchenmaschine, etc...) die zur Handhabung durch einen Menschen ausgeführt ist, und die eine Sensorvorrichtung, wie vorstehend beschrieben, aufweist. Vorteilhaft weist eine solche Maschine den kombinierten Sensor an einer Handhabungsschnittstelle der Maschine auf. Weiterhin vorteilhaft weist die Maschine eine Schaltlogik auf, die eine Inbetriebname der Maschine nur dann ermöglicht, wenn von der Sensorvorrichtung erkannt wird, dass auf die Handhabungsschnittstelle, d.h. insbesondere den dort angeordneten kombinierten Sensor, eine vorgegebene Mindestkraft F_{ext, min} durch ein Objekt aus einem vorgegebenen Material MAT" ausgeübt wird. Somit lassen sich verschiedenartige Sicherheitskonzepte zum Betrieb oder zur Inbetriebnahme von Maschinen umsetzen.

Ein weiterer Aspekt der Erfindung betrifft ein Verfahren zum Betrieb eines kombinierten Sensors, der zur gleichzeitigen Erfassung einer durch ein Objekt OBJ aus einem Material MAT auf den Sensor ausgeübten mechanischen Kraft Fₑₓₜ, einer Position POS_{Fext} des Krafteintrags Fₑₓₜ auf dem Sensor und einer elektrischen kapazitiven Koppelung C_{SEN-OBJ} des Sensors mit dem Objekt OBJ aus dem Material MAT eingerichtet und ausgeführt ist, umfassend folgende Schritte.

In einem Schritt erfolgt für eine Anzahl N von vorgegebenen Materalien MATₙ ein Bereitstellen von Zusammenhängen Zₙ der kapazitiven Koppelung C_{SEN-OBJ-MATn} des Sensors mit einem Objekt OBJ aus einem Material MATₙ in Abhängigkeit von einer mechanischen Kraft F_{ext,OBJ}, die das Objekt OBJ auf den Sensor (101) ausübt, mit n = 1, 2, ..., N und N ≥ 1.

In einem weiteren Schritt erfolgt mit dem Sensor ein Ermitteln von Messwerten: Fₑₓₜ(t), POS_{Fext}(t) und C_{SEN-OBJ}(t).

In einem weiteren Schritt erfolgt auf Basis der Zusammenhänge Zₙ ein Ermitteln des Materials MAT* des Objekts OBJ, das die Kraft Fₑₓₜ(t) auf den Sensor ausübt, mit MAT* ε MATₙ.

In einem weiteren Schritt erfolgt ein Ausgeben des ermittelten Materials MAT*.

Vorteilhaft wird zusätzlich die ermittelte externe Kraft Fₑₓₜ(t) und/oder die Position POS_{Fext}(t) des Krafteintrags auf dem Sensor ausgegeben.

Eine vorteilhafte Weiterbildung des vorgeschlagenen Verfahrens zeichnet sich dadurch aus, dass die Zusammenhänge Zₙ eine Abhängigkeit der kapazitiven Koppelung C_{SEN-OBJ-MATn,Fu} von einer Frequenz F_{U} einer Messspannung des Sensors beinhalten: Zₙ = Zₙ(Fᵤ), und das Ermitteln und Ausgeben von C_{SEN-OBJ,Fu}(t) für verschiedene Frequenzen F_{U} erfolgt.

Das vorgeschlagene Verfahren ermöglicht eine robustere und genauere Bestimmung des ermittelten Materials MAT* eines Objekts, das den Sensor berührt und eine Kraft Fₑₓₜ auf den Sensor ausübt. Der vorgeschlagene kombinierte Sensor ermöglicht die Umsetzung von Sicherheitskonzepten, beispielsweise bei der Bedienung von Maschinen oder Geräten.

Wird beispielsweise ein derartiger kombinierter Sensor an der Oberfläche einer Maschine in dem Bereich integriert, in dem eine Handhabung (Greifen / Bedienen) der Maschine durch den Menschen erfolgt, so kann durch die vorgeschlagene Sensorvorrichtung festgestellt werden, ob ein Mensch (biologisches Material) die Maschine am Bedienbereich berührt (und eine entsprechende Kraft auf den Bedienbereich ausübt) oder ein Gegenstand aus einem anderen Material. Je nachdem kann das Verhalten der Maschine bspw. unterschiedlich programmiert werden.

Weiterhin können Bedienfunktionen einer Maschine realisiert werden, die abhängig davon sind, mit welchem Material ein an der Maschine verbauter erfindungsgemäßer kombinierter Sensor berührt wird. Beispielsweise kann eine Kettensäge mit einem erfindungsgemäßen Sensorsystem und einem am Bediengriff der Kettensäge angeordneten kombinierten Sensor erkennen, ob die Kettensäge am Bediengriff mit einem Objekt aus einem bestimmten Material, bspw. einem schnittfesten Handschuh aus einem bestimmten Material, gegriffen wird, wobei die Kettensäge nur dann einen Betrieb freigibt, wenn das bestimmte, d.h. vorgegebene, Material erkannt wird.

Weitere Vorteile, Merkmale und Einzelheiten ergeben sich aus der nachfolgenden Beschreibung, in der - gegebenenfalls unter Bezug auf die Zeichnungen - zumindest ein Ausführungsbeispiel im Einzelnen beschrieben ist. Gleiche, ähnliche und/oder funktionsgleiche Teile sind mit gleichen Bezugszeichen versehen.

Es zeigen:

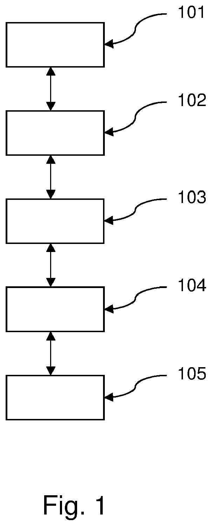

- Fig. 1: einen stark schematisierten Aufbau eines erfindungsgemäßen Sensorsystems und

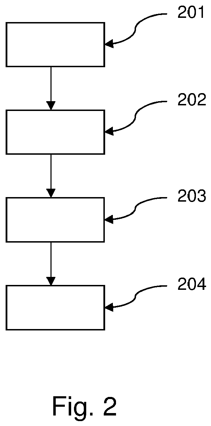

- Fig. 2: ein stark schematisiertes Ablaufschema eines erfindungsgemäßen Verfahrens.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche definiert wird.

### Bezugszeichenliste

- 101: kombinierter Sensor
- 102: Datenbank
- 103: Erfassungseinheit
- 104: Auswerteeinheit
- 105: Ausgabeeinheit
- 201 - 204: Verfahrensschritte

## Patentansprüche

1. Sensorvorrichtung mit einem kombinierten Sensor (101), der zur gleichzeitigen Erfassung einer durch ein Objekt OBJ aus einem Material MAT auf den Sensor (101) ausgeübten mechanischen Kraft Fₑₓₜ, einer Position POS_{Fext} des Krafteintrags Fₑₓₜ auf dem Sensor (101) und einer elektrischen kapazitiven Koppelung C_{SEN-OBJ} des Sensors (101) mit dem Objekt OBJ aus dem Material MAT eingerichtet und ausgeführt ist, umfassend:
- eine Datenbank (102), mittels der für eine Anzahl N von vorgegebenen Materalien MATₙ Zusammenhänge Zₙ der kapazitiven Koppelung C_{SEN-OBJ-MATn} des Sensors (101) mit einem Objekt OBJ aus einem Material MATₙ in Abhängigkeit von einer mechanischen Kraft F_{ext,OBJ}, die das Objekt OBJ auf den Sensor (101) ausübt, bereitgestellt werden, mit n = 1, 2, ..., N und N ≥ 1,
- eine Erfassungseinheit (103), mittels der aus Sensordaten des Sensors (101) die aktuellen Messwerte: Fₑₓₜ(t), POS_{Fext}(t) und C_{SEN-OBJ}(t) ermittelt werden,
- eine Auswerteeinheit (104), mittels der auf Basis der Zusammenhänge Zₙ das Material MAT* des Objekts OBJ ermittelt wird, das die Kraft Fₑₓₜ(t) auf den Sensor (101) ausübt, mit MAT* ε MATₙ, und
- eine Ausgabeeinheit (105), mittels der das ermittelte Materials MAT*, ausgegeben wird.

2. Sensorvorrichtung nach Anspruch 1,
bei der die von der Datenbank (102) bereitgestellten Zusammenhänge Zₙ eine Abhängigkeit der kapazitiven Koppelung C_{SEN-OBJ-MATn} von einer Frequenz F_{U} einer Messspannung des Sensors (101) beinhalten: Zₙ = Zₙ(Fᵤ), und die Ausgabeeinheit (105) die kapazitive Koppelung C_{SEN-OBJ}(t) für verschiedene Frequenzen F_{U} ermittelt und ausgibt.

3. Greifvorrichtung mit einer Sensorvorrichtung nach Anspruch 1 oder 2.

4. Greifvorrichtung nach Anspruch 3,
mit zumindest einer Greiferbacke, die eine Greiffläche zum Greifen von Objekten OBJ aufweist, wobei der kombinierte Sensor (101) an der Greiffläche angeordnet ist.

5. Roboter oder Robotermanipulator mit einer Greifvorrichtung nach Anspruch 3 oder 4.

6. Maschine, die zur Handhabung durch einen Menschen ausgeführt ist, mit einer Sensorvorrichtung nach einem der Ansprüche 1 oder 2.

7. Verfahren zum Betrieb einer Sensorvorrichtung mit einem kombinierten Sensor (101), der zur gleichzeitigen Erfassung einer durch ein Objekt OBJ aus einem Material MAT auf den Sensor (101) ausgeübten mechanischen Kraft Fₑₓₜ, einer Position POS_{Fext} des Krafteintrags Fₑₓₜ auf dem Sensor (101) und einer elektrischen kapazitiven Koppelung C_{SEN-OBJ} des Sensors (101) mit dem Objekt OBJ aus dem Material MAT eingerichtet und ausgeführt ist, umfassend folgende Schritte:
- für eine Anzahl N von vorgegebenen Materalien MATₙ Bereitstellen (201) von Zusammenhängen Zₙ der kapazitiven Koppelung C_{SEN-OBJ-MATn} des Sensors (101) mit einem Objekt OBJ aus einem Material MATₙ in Abhängigkeit von einer mechanischen Kraft F_{ext,OBJ}, die das Objekt OBJ auf den Sensor (101) ausübt, mit n = 1, 2, ..., N und N ≥ 1,
- mit dem Sensor (101) Ermitteln (202) von Messwerten: Fₑₓₜ(t), POS_{Fext}(t) und C_{SEN-OBJ}(t),
- auf Basis der Zusammenhänge Zₙ Ermitteln (203) des Materials MAT* des Objekts OBJ, das die Kraft Fₑₓₜ(t) auf den Sensor (101) ausübt, mit MAT* ε MATₙ, und
- Ausgeben (204) des ermittelten Materials MAT*, der ermittelten externen Kraft Fₑₓₜ(t) sowie der Position des POS_{Fext}(t) des Krafteintrags.

8. Verfahren nach Anspruch 7,
bei dem die ermittelte externe Kraft Fₑₓₜ(t) und/oder die Position des POS_{Fext}(t) des Krafteintrags ausgegeben wird.

9. Verfahren nach Anspruch 7 oder 8,
bei dem die Zusammenhänge Zₙ eine Abhängigkeit der kapazitiven Koppelung C_{SEN-OBJ-MATn} von einer Frequenz F_{U} einer Messspannung des Sensors (101) beinhalten: Zₙ = Zₙ(Fᵤ), und das Ermitteln und Ausgeben von C_{SEN-OBJ,Fu}(t) für verschiedene Frequenzen F_{U} erfolgt.

10. Verfahren nach einem der Ansprüche 7 bis 9,
bei dem ein Material MAT" vorgegeben ist und im Falle, dass gilt: MAT* = MAT" ein Signal erzeugt wird, das zur Steuerung einer Maschine genutzt wird.

## Claims

1. Sensor device with a combined sensor (101), which is configured and designed to simultaneously detect a mechanical force Fₑₓₜ exerted on the sensor (101) by an object OBJ made of a material MAT, a position POS_{Fext} of the application of force Fₑₓₜ on the sensor (101) and an electrical capacitive coupling C_{SEN-OBJ} of the sensor (101) with the object OBJ made of the material MAT, comprising:
- a database (102), by means of which, for a number N of predefined materials MATₙ, relationships Zₙ of the capacitive coupling C_{SEN-OBJ-MATn} of the sensor (101) with an object OBJ made of a material MATₙ are provided depending on a mechanical force Fe_{xt,OBJ} the object OBJ exerts on the sensor (101), where n = 1, 2, ..., N and N ≥ 1,
- a detection unit (103), by means of which the current measured values: Fₑₓₜ (t), POS_{Fext} (t) and C_{SEN-OBJ}(t) are determined from sensor data of the sensor (101);
- an evaluation unit (104), by means of which the material MAT* of the object OBJ which exerts the force Fₑₓₜ(t) on the sensor (101) is identified on the basis of the relationships Zₙ, where MAT* ∈ MATₙ, and
- an output unit (105), by means of which the material MAT* that is identified is output.

2. Sensor device according to Claim 1, in which the relationships Zₙ provided by the database (102) include a dependence of the capacitive coupling C_{SEN-OBJ-MATn} on a frequency F_{U} of a measurement voltage of the sensor (101) : Zₙ = Zₙ(F_{U}), and the output unit (105) determines and outputs the capacitive coupling C_{SEN-OBJ}(t) for various frequencies F_{U}.

3. Gripping apparatus with a sensor device according to Claim 1 or 2.

4. Gripping apparatus according to Claim 3, with at least one gripper jaw which has a gripping surface for gripping objects OBJ, wherein the combined sensor (101) is arranged on the gripping surface.

5. Robot or robot manipulator with a gripping apparatus according to Claim 3 or 4.

6. Machine designed for manipulation by a human, with a sensor device according to one of Claims 1 or 2.

7. Method for operating a sensor device with a combined sensor (101), which is configured and designed to simultaneously detect a mechanical force Fₑₓₜ exerted on the sensor (101) by an object OBJ made of a material MAT, a position POS_{Fext} of the application of force Fₑₓₜ on the sensor (101), and an electrical capacitive coupling C_{SEN-OBJ} of the sensor (101) with the object OBJ made of the material MAT, comprising the following steps:
- for a number N of predefined materials MATₙ, providing (201) relationships Zₙ of the capacitive coupling C_{SEN-OBJ-MATn} of the sensor (101) with an object OBJ made of a material MATₙ depending on a mechanical force F_{ext,OBJ} that the object OBJ exerts on the sensor (101), where n = 1, 2,..., N and N ≥ 1,
- with the sensor (101), determining (202) measured values: Fₑₓₜ (t), POS_{Fext} (t) and C_{SEN-OBJ}(t),
- identifying (203) the material MAT* of the object OBJ that exerts the force Fₑₓₜ(t) on the sensor (101) on the basis of the relationships Zₙ, where MAT* ∈ MATₙ, and
- outputting (204) the identified material MAT*, the determined external force Fₑₓₜ(t) and the position of the POS_{Fex}(t) of the application of force.

8. Method according to Claim 7, in which the determined external force Fₑₓₜ(t) and/or the position of the POS_{Fext}(t) of the application of the force is output.

9. Method according to Claim 7 or 8, in which the relationships Zₙ include a dependence of the capacitive coupling C_{SEN-OBJ-MATn} on a frequency F_{U} of a measurement voltage of the sensor (101) : Zₙ = Zₙ(F_{U}), and C_{SEN-OBJ,FU}(t) are determined and output for various frequencies F_{U}.

10. Method according to any one of Claims 7 to 9, in which a material MAT" is specified, and if: MAT* = MAT" a signal is generated which is used to control a machine.

## Revendications

1. Dispositif de capteur comportant un capteur combiné (101) qui est conçu et exécuté pour la détection simultanée d'une force mécanique Fₑₓₜ exercée par un objet OBJ en un matériau MAT sur le capteur (101), d'une position POS_{Fext} de l'entrée de force Fₑₓₜ sur le capteur (101) et d'un couplage capacitif électrique C_{SEN-OBJ} du capteur (101) avec l'objet OBJ en matériau MAT, comprenant :
- une base de données (102), au moyen de laquelle, pour un nombre N de matériaux prédéterminés MATₙ, des relations Zₙ du couplage capacitif C_{SEN-OBJ-MATn} du capteur (101) avec un objet OBJ constitué d'un matériau MATₙ en fonction d'une force mécanique Fext,0BJ , que l'objet OBJ exerce sur le capteur (101), sont fournies, avec n = 1, 2,..., N et N ≥ 1,
- une unité de détection (103), au moyen de laquelle les valeurs mesurées actuelles : Fₑₓₜ (t), POS_{Fext} (t) et C_{SEN-OBJ} (t) sont déterminées à partir des données du capteur (101),
- une unité d'évaluation (104), au moyen de laquelle on détermine, à partir des relations Zₙ, le matériau MAT* de l'objet OBJ, qui exerce la force Fₑₓₜ(t) sur le capteur (101), avec MAT*∈ MATₙ, et
- une unité de sortie (105), au moyen de laquelle le matériau déterminé MAT* est émis.

2. Dispositif de capteur selon la revendication 1, dans lequel les relations fournies par la base de données (102) Zₙ contiennent une dépendance du couplage capacitif C_{SEN-OBJ-MATn} à une fréquence F_{U} d'une tension de mesure du capteur (101) : Zₙ = Zₙ(F_{U}), et l'unité de sortie (105) détermine et sort le couplage capacitif C_{SEN-OBJ}(t) pour différentes fréquences F_{U}.

3. Dispositif de préhension comportant un dispositif de capteur selon la revendication 1 ou 2.

4. Dispositif de préhension selon la revendication 3, comportant au moins une mâchoire de préhension qui présente une surface de préhension pour saisir des objets OBJ, dans lequel le capteur combiné (101) est disposé sur la surface de préhension.

5. Robot ou robot manipulateur doté d'un dispositif de préhension selon la revendication 3 ou 4.

6. Machine conçue pour être manipulée par un humain, comportant un dispositif de capteur selon une des revendications 1 ou 2.

7. Procédé de fonctionnement d'un dispositif de capteur avec un capteur combiné (101), qui est conçu et exécuté pour la détection simultanée d'une force mécanique Fₑₓₜ exercée par un objet OBJ en un matériau MAT sur le capteur (101), d'une position POS_{Fext} de l'entrée de force Fₑₓₜ sur le capteur (101) et d'un couplage capacitif électrique C_{SEN-OBJ} du capteur (101) avec l'objet OBJ en matériau MAT, comprenant les étapes suivantes :
- pour un nombre N de matériaux prédéterminés MATₙ, (201) des relations Zₙ du couplage capacitif C_{SEN-OBJ-MATn} du capteur (101) avec un objet OBJ constitué d'un matériau MATₙ en fonction d'une force mécanique F_{ext,OBJ}, que L'objet OBJ exerce sur le capteur (101), avec n = 1, 2,..., N et N ≥ 1,
- déterminer (202) avec le capteur (101) les valeurs mesurées : Fₑₓₜ (t), POS_{Fext} (t) et C_{SEN-OBJ} (t),
- sur la base des relations Zₙ, déterminer (203) le matériau MAT* de l'objet OBJ, qui exerce la force Fₑₓₜ(t) sur le capteur (101), avec MAT*ε MATn, et
- sortir (204) le matériau déterminé MAT*, la force externe déterminée Fₑₓₜ(t) et la position du POS_{Fext}(t) de l'entrée de force.

8. Procédé selon la revendication 7, dans lequel la force externe déterminée Fₑₓₜ (t) et/ou la position du POS_{Fext} (t) de l'entrée de force sont délivrées.

9. Procédé selon la revendication 7 ou 8, dans lequel les relations Zₙ incluent une dépendance du couplage capacitif C_{SEN-OBJ-MATn} à une fréquence F_{U} d'une tension de mesure du capteur (101) : Zₙ = Zₙ(Fᵤ), ainsi que la détermination et la sortie de C_{SEN-OBJ-Fu}(t) pour différentes fréquences F_{U}.

10. Procédé selon une des revendications 7 à 9, dans lequel on prescrit un matériau MAT" et dans le cas où : MAT* = MAT" on génère un signal qui est utilisé pour commander une machine.
